# EUROPEAN PATENT APPLICATION

(11) **EP 3 363 727 A1**
(43) Date of publication of application: **22.08.2018**
(21) Application number: 16855581.1
(22) Date of filing: 08.03.2016
(51) Int. Cl.: B63B 25/16, F17C 3/02, F17C 13/00, B65D 90/06, B63B 9/00

(54) **MEMBRANE ASSEMBLY FOR WELDING MEMBRANE OF MEMBRANE TYPE STORAGE TANK AND MEMBRANE WELDING DEVICE GUIDE SYSTEM INCLUDING SAME**

(30) Priority: 12.10.2015 KR 20150142010
(71) Applicant: Daewoo Shipbuilding & Marine Engineering Co., Ltd., Seoul 04521 (KR)
(72) Inventor: PARK, Seong Woo, Geoje-si Gyeongsangnam-do 53224 (KR); HWANG, Beom Seok, Suwon-si Gyeonggi-do 16205 (KR); KANG, Joong Kyoo, Geoje-si Gyeongsangnam-do 53296 (KR)
(74) Representative: Cabinet Beau de Loménie
(86) International application number: PCT/KR2016/002271
(87) International publication number: WO 2017/065363

(57) **Abstract**

A membrane welding device guide system according to the present invention comprises: an anchor strip arranged on an insulation wall which configures an insulation system of a liquefied gas storage tank; a stud integrally formed with the anchor strip, the center of the stud deviating from a welding line of the anchor strip; and a guide rail which is coupled to the stud to form a path of an automatic membrane welding device for welding a membrane to be stacked on the insulation wall. Therefore, the present invention allows membrane welding to be easily performed and allows a membrane welding device to be stably guided.

## Description

### [Technical Field]

The present invention relates to a membrane assembly for facilitating welding of a membrane of a membrane-type storage tank and a membrane welding apparatus guide system including the same.

### [Background Art]

Natural gas is a fossil fuel containing methane as a main component and a small amount of ethane, propane and the like, and is drawing attention as a low-pollution energy source in various technical fields.

Natural gas is transported in a gaseous state via onshore or offshore gas pipelines, or is transported in a liquid state to a distant destination by an LNG carrier. LNG is obtained by cooling natural gas to a cryogenic temperature (about -163°C or less) and has a volume of about 1/600 that of natural gas in a gaseous state. Thus, LNG is suited to long distance transport by sea.

An LNG carrier is provided with an LNG storage tank that can store LNG obtained by cooling and liquefying natural gas (also referred to as "LNG cargo hold"). Since LNG has a boiling point of about -162°C at atmospheric pressure, the LNG storage tank is formed of a material that can withstand cryogenic temperatures, such as such as aluminum steel, stainless steel, or 35% nickel steel, to safely store LNG and is designed to be highly resistant to thermal stress and thermal shrinkage and to prevent heat intrusion.

Besides an LNG carrier, which is designed to carry LNG by sea to an onshore source of demand, an LNG regasification vessel (LNG RV), which is designed to carry LNG by sea to an onshore source of demand, regasify the LNG, and discharge the regasified LNG to the onshore source of demand, and a floating offshore structure such as LNG floating, production, storage and offloading (FPSO) or an LNG floating storage and regasification unit (FSRU) are also provided with such an LNG storage tank.

An LNG-FPSO is a floating offshore structure that is designed to liquefy produced natural gas at sea, store LNG in a storage tank, and, if necessary, offload the LNG to an LNG carrier. An LNG-FSRU is a floating offshore structure that is designed to store LNG offloaded from an LNG carrier in a storage tank and, if necessary, regasify the LNG and supply the regasified LNG to an onshore source of demand.

Such offshore vessels carrying LNG by sea or storing LNG, such as LNG carriers, LNG RVs, LNG FPSOs, and LNG FSRUs, are provided therein with a storage tank storing LNG in a cryogenic state.

Such a storage tank is divided into an independent storage tank and a membrane-type storage tank depending on whether an insulator thereof directly receives a load of a cargo. In addition, the membrane-type storage tank is divided into a GTT NO 96-type tank and a TGZ Mark III-type tank, and the independent storage tank is divided into an MOSS-type tank and an IHI-SPB-type tank.

Generally, the membrane-type storage tank has a structure in which first and second membranes and first and second heat insulating walls are alternately stacked on an inner wall of the storage tank.

For convenience, a "first" component refers to an upper component in the stacked structure.

Thus, the membrane-type storage tank has a structure in which the second membrane is stacked on the second heat insulating wall and the first heat insulating wall and the first membrane are sequentially stacked on the second membrane.

A membrane is formed of steel to seal a storage tank storing liquefied gas, and anchor strips are appropriately attached to a heat insulating wall in the transverse and longitudinal directions so as to weld the membrane to the heat insulating wall.

In addition to the anchor strips, the second heat insulating wall is provided thereon with a plurality of studs for coupling the second membrane to the second heat insulating wall.

A membrane is welded to an anchor strip using an automatic welding machine. Conventionally, depending on the structure of a heat insulating system, such an automatic welding machine is moved along welds of a membrane without a separate rail, or is guided by a rail mounted on a jig disposed at an intersection of corrugations of the membrane.

However, when an automatic membrane welding machine is operated without a rail, it is difficult to guarantee accuracy and safety of welding operations during a production process. In order to provide a rail, a separate structure for mounting the rail is required.

However, when the separate structure for mounting the rail is disposed through the membrane, sealing capacity of the membrane can deteriorate.

This is more so since there is no more available structure in the case of the first membrane.

### [Disclosure]

### [Technical Problem]

Embodiments of the present invention have been conceived to solve such a problem in the art and it is an object of the present invention to provide a membrane assembly for facilitating welding of a membrane and a membrane welding apparatus guide system including the same.

### [Technical Solution]

In accordance with one aspect of the present invention, a membrane welding apparatus guide system includes: an anchor strip disposed on a heat insulating wall constituting a heat insulating system of a liquefied gas storage tank; a stud integrally formed with the anchor strip to be centered outside a welding line of the anchor strip; and a guide rail coupled to the stud to form a path for an automatic welding apparatus for welding a membrane to be mounted on the heat insulating wall.

The welding line may be formed on the anchor strip along a center line of the anchor strip.

A plurality of vacuum pads are mounted on the guide rail, and the plurality of vacuum pads are adsorbed on the membrane.

The membrane may be a second membrane mounted on a second heat insulating wall disposed in a lower layer of the heat insulating system.

In accordance with another aspect of the present invention, a membrane assembly includes: an anchor strip disposed on a heat insulating wall constituting a heat insulating system of a liquefied gas storage tank; a membrane welded to the anchor strip to be mounted on the heat insulating wall; and a stud integrally formed with the anchor strip to be centered outside a welding line of the anchor strip.

The welding line may be formed on the anchor strip along a center line of the anchor strip.

The membrane assembly may be mounted on a second heat insulating wall disposed in a lower layer of the heat insulating system.

In accordance with a further aspect of the present invention, a membrane welding apparatus guide system includes: anchor strips arranged at constant intervals on a heat insulating wall constituting a heat insulating system of a liquefied gas storage tank in transverse and longitudinal directions of the heat insulating wall; studs disposed at intersections of the anchor strips arranged in the transverse and longitudinal directions; and a guide rail coupled to the studs to form a path for an automatic welding apparatus for welding a membrane to be mounted on the heat insulating wall.

A plurality of vacuum pads are mounted on the guide rail, and the plurality of vacuum pads are adsorbed on the membrane.

The membrane may be a first membrane mounted on a first heat insulating wall disposed in an upper layer of the heat insulating system.

### [Advantageous Effects]

In a membrane assembly and a membrane welding apparatus guide system including the same according to the present invention, welding of a membrane can be performed without penetrating membrane, stability of the guide rail can be improved by vacuum pads, and interference by studs can be reduced during welding of the membrane, thereby allowing more stable and efficient welding operations.

### [Description of Drawings]

FIG. 1 is a schematic view of a membrane welding apparatus guide system including a membrane assembly for welding a membrane of a membrane-type storage tank according to one embodiment of the present invention.
FIG. 2 is a partial view of the membrane welding apparatus guide system according to the embodiment of the present invention.

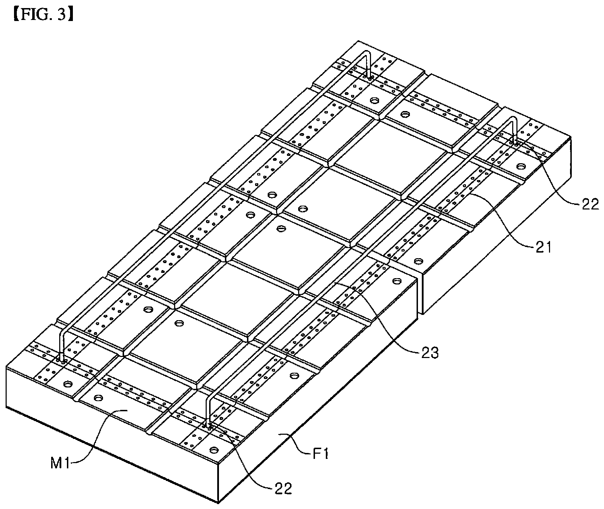

FIG. 3 is a schematic view of a membrane welding apparatus guide system including a membrane assembly for welding a membrane of a membrane-type storage tank according to another embodiment of the present invention.

### [Best Mode]

Embodiments of the present invention will be described with reference to the accompanying drawings. It should be noted that like components will be denoted by like reference numerals throughout the specification and the accompanying drawings. In addition, description of known functions and constructions which may unnecessarily obscure the subject matter of the present invention will be omitted.

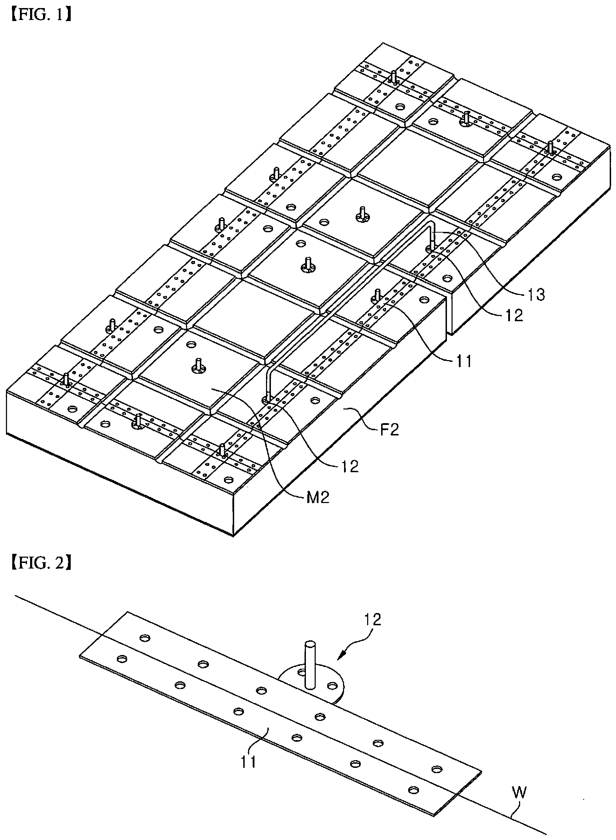

FIG. 1 is a schematic view of a membrane welding apparatus guide system including a membrane assembly for welding membranes of a membrane-type storage tank according to one embodiment of the present invention and FIG. 2 is a partial view of a membrane welding apparatus guide system according to one embodiment of the present invention.

Hereinafter, a membrane welding apparatus guide system according to one embodiment of the present invention will be described with reference to FIG. 1 and FIG. 2.

A membrane welding apparatus guide system according to this embodiment includes anchor strips 11, studs 12, and a guide rail 13.

The anchor strips 11 are provided to a heat insulating wall F2 constituting a heat insulating system of a liquefied gas storage tank to allow a membrane M2 mounted on the heat insulating wall F2 to be welded to the anchor strips 10.

For this purpose, the anchor strips 11 are preferably formed of stainless steel (SUS) and arranged at constant intervals on the heat insulating wall F2 corresponding to the size of a unit membrane in transverse and longitudinal directions of the heat insulating wall.

In this embodiment, the heat insulating wall F2 and the membrane M2 may be a second heat insulating wall F2 and a second membrane M2, which are disposed in a lower layer of the heat insulating system, that is, at an inner wall side of the storage tank, respectively.

The second heat insulating wall F2 is provided thereon with a plurality of studs for coupling the second heat insulating wall M2 to a first heat insulating wall that will be mounted on the second membrane M2.

Each of the studs 12 of the membrane welding apparatus guide system according to this embodiment is integrally formed with the anchor strip 11 to be centered outside a welding line W of the anchor strip 11 and is attached to the heat insulating wall F2.

Herein, the welding line W refers to a line along which the membrane is welded to the anchor strip 11 and generally bisects the width of the anchor strip 11 in a longitudinal direction of the anchor strip 11.

When the stud 12 is centered outside the welding line W of the anchor strip 11, an automatic membrane welding apparatus cannot be disturbed by the stud 12 when moved along the anchor strip 11 to perform welding.

A membrane has a different degree of thermal shrinkage-induced deformation than a heat insulating wall. If the stud and the anchor strip are separately formed, the stud and the anchor strip can be separately displaced upon shrinkage of the membrane and the heat insulating wall. Thus, it is desirable that the stud be integrally formed with the anchor strip to reduce difference in the degree of deformation between the stud and the anchor strip.

The guide rail 13 allows the automatic membrane welding apparatus to be guided along the welding line W of the anchor strip 11. The guide rail 13 is coupled to the studs 12 integrally formed with the anchor strip 11 to be centered outside the welding line W of the anchor strip 11, such that the automatic membrane welding apparatus can be moved on the guide rail to weld the membrane.

In addition, the guide rail 13 may include a plurality of vacuum pads (not shown) mounted thereon. The plurality of vacuum pads are adsorbed on the membrane M2 to double-secure the guide rail, thereby allowing the guide rail to be more stably and firmly held in place.

A membrane welding apparatus guide system according to another embodiment of the present invention includes anchor strips 21, studs 22, and a guide rail 23.

The anchor strips 21 are provided to a heat insulating wall F1 constituting a heat insulating system of a liquefied gas storage tank, such that a membrane M1 mounted on the heat insulating wall F1 can be welded to the anchor strips 21.

For this purpose, the anchor strips 21 are preferably formed of stainless steel (SUS) and are arranged at constant intervals on the heat insulating wall F1 corresponding to the size of a unit membrane in the transverse and longitudinal directions of the heat insulating wall.

In this embodiment, the heat insulating wall F1 and the membrane M1 may be a first heat insulating wall F1 and a first membrane M1, which are disposed in an upper layer of the heat insulating system, that is, at an inner space side of the storage tank, respectively.

The first heat insulating wall F1 is not provided thereon with studs for coupling the first heat insulating wall F1 to the second heat insulating wall F2.

Thus, there is no special structure available for placement of the guide rail on the first heat insulating wall.

In this embodiment, the studs 22 are disposed at intersections of the anchor strips 21 arranged in the transverse and longitudinal directions such that the guide rail 23 can be coupled to the studs 22.

With this placement of the studs 22 at the intersections of the anchor strips 21, the guide rail can be mounted on the studs 22 simply by appropriately chamfering the membrane without a need to mount a separate structure for mounting of the guide rail, such as a jig, on the membrane M1 or to couple the separate structure through the membrane M1.

In addition, the guide rail 23 may include a plurality of vacuum pads mounted thereon. The plural vacuum pads are adsorbed on the membrane M2 to double-secure the guide rail, thereby allowing the guide rail to be more stably and firmly held in place.

As described above, the membrane welding apparatus guide system and membrane assembly according to the present invention can allow automatic welding of a membrane to a heat insulating wall to be easily performed while stably and firmly guiding an automatic welding apparatus.

Although some embodiments have been described herein, it should be understood by those skilled in the art that these embodiments are given by way of illustration only and the present invention is not limited thereto. In addition, it should be understood that various modifications, variations, and alterations can be made by those skilled in the art without departing from the spirit and scope of the present invention.

### List of Reference Numerals

11,21: anchor strip
12,22: stud
13,23: guide rail
M1, M2: membrane
F1, F2: heat insulating wall
W: welding line

## Claims

1. A membrane welding apparatus guide system, comprising:
an anchor strip disposed on a heat insulating wall constituting a heat insulating system of a liquefied gas storage tank;
a stud integrally formed with the anchor strip to be centered outside a welding line of the anchor strip; and
a guide rail coupled to the stud to form a path for an automatic welding apparatus for welding a membrane to be mounted on the heat insulating wall.

2. The membrane welding apparatus guide system according to claim 1, wherein the welding line is formed on the anchor strip along a center line of the anchor strip.

3. The membrane welding apparatus guide system according to claim 2, wherein the guide rail comprises a plurality of vacuum pads mounted thereon, the plurality of vacuum pads being absorbed on the membrane.

4. The membrane welding apparatus guide system according to claim 2, wherein the membrane is a second membrane mounted on a second heat insulating wall disposed in a lower layer of the heat insulating system.

5. A membrane assembly, comprising:
an anchor strip disposed on a heat insulating wall constituting a heat insulating system of a liquefied gas storage tank;
a membrane welded to the anchor strip to be mounted on the heat insulating wall; and
a stud integrally formed with the anchor strip to be centered outside a welding line of the anchor strip.

6. The membrane assembly according to claim 5, wherein the welding line is formed on the anchor strip along a center line of the anchor strip.

7. The membrane assembly according to claim 6, wherein the membrane assembly is mounted on a second heat insulating wall disposed in a lower layer of the heat insulating system.

8. A membrane welding apparatus guide system, comprising:
anchor strips arranged at constant intervals on a heat insulating wall constituting a heat insulating system of a liquefied gas storage tank in transverse and longitudinal directions of the heat insulating wall;
studs disposed at intersections of the anchor strips arranged in the transverse and longitudinal directions; and
a guide rail coupled to the studs to form a path for an automatic welding apparatus for welding a membrane to be mounted on the heat insulating wall.

9. The membrane welding apparatus guide system according to claim 8, wherein the guide rail comprises a plurality of vacuum pads mounted thereon, the plurality of vacuum pads being absorbed on the membrane.

10. The membrane welding apparatus guide system according to claim 8, wherein the membrane is a first membrane mounted on a first heat insulating wall disposed in an upper layer of the heat insulating system.
